# EUROPEAN PATENT APPLICATION

(11) **EP 4 851 516 A1**
(43) Date of publication of application: **09.12.2026**
(21) Application number: 26183189.5
(22) Date of filing: 04.06.2026
(51) Int. Cl.: F16L 55/052

(54) **FLUID DAMPER FOR REDUCING PRESSURE PULSATIONS IN A FLUID LINE**

(30) Priority: 05.06.2025 EP 25181036
(71) Applicant: Tetra Laval Holdings & Finance S.A., 1009 Pully (CH)
(72) Inventor: Leufsted, Max, 221 86 Lund (SE); Karlsson, Christer, 221 86 Lund (SE)
(74) Representative: Tetra Pak Patent Attorneys

(57) **Abstract**

The present invention relates to fluid damper (1) for reducing pressure pulsations in a fluid line filled with a liquid food product (P). The damper (1) comprises an inner tube (10), and a flange (100). The flange (100) is connected to a top portion (12) of the inner tube (10), such that an upper component (2) is connectable to the flange (100) to be in fluid communication with the interior (I) of the inner tube (10) via a central passage (CP) of the flange (100). A transition portion (120) of the central passage (CP) extending from a lower end portion (112), associated with a lower end (110) of the central passage (CP), towards an upper end (130) of the central passage (CP) has a continuously decreasing diameter.

## Description

### Technical Field

The invention relates to the field of liquid food processing. More particularly, it is related to a fluid damper for reducing pressure pulsations in a fluid line. The fluid damper has an inner tube and a flange connected to a top portion of the inner tube.

### Background Art

Today homogenizers are widely used in liquid food processing to make products like milk more homogeneous by reducing fat globules, and to create stable emulsions in oil and water mixtures, enhancing texture, mouthfeel, and consistency. High-pressure homogenizers, featuring piston pumps and homogenization valves, commonly pressurize food products to above 200 bar. However, this process can generate pressure pulsations, risking damage to the homogenizer and other equipment. To mitigate this, dampers with air cushions are used to absorb these pulsations, preventing equipment damage.

A major design criteria when designing a damper is to provide a damper which is efficient in terms of damping pressure pulsations. However, not only is the efficiency of such a damper important, but also the cleanability and ability to sterilize the damper. A damper, just like any other equipment of a liquid food processing line must be thoroughly cleaned at regular intervals or else there is a risk that the quality of the liquid food becomes inferior. Such cleaning typically involve cleaning in place, CIP, processes. In addition to CIP cleaning the damper, the damper must typically be sterilized before entering into service after having been cleaned. In order to sterilize the damper, the damper is typically heated to a certain temperature for a certain time so as to kill and neutralize any microorganisms, bacteria, viruses or similar in the damper. Even though currently available dampers are efficient in terms of damping pressure pulsations and may be efficiently cleaned in in CIP processes, the subsequent sterilization of the dampers tend to be troublesome and time consuming. Hence, there is room for improvement when it comes to providing dampers which may be sterilized more efficiently while not compromising the damping efficiency and the cleanability of the damper.

### Summary

It is an objective of the invention to at least partly overcome one or more of the above-identified limitations of the prior art.

One such objective is to provide a fluid damper for reducing pressure pulsations in a fluid line that may be more efficiently sterilized. Herein sterilize means to kill or eliminate all forms of microbial life within the damper. That is, to kill or eliminate all forms of microbial life within all locations of the damper including in any gas, such as air, resident within the damper.

Another objective is to provide such a fluid damper that may be cleaned in a CIP process more efficiently.

Another objective is to provide such a fluid damper that requires less downtime for sterilizing.

Another objective is to provide such a fluid damper that requires less space.

Another objective is to provide such a fluid damper that requires less material to fabricate.

One or more of these objectives, as well as further objectives that may appear from the description below, are at least partly achieved by a fluid damper for reducing pressure pulsations in a fluid line filled with a liquid food product according to the independent claim, embodiments thereof being defined by the dependent claims.

A first aspect relates to a fluid damper for reducing pressure pulsations in a fluid line filled with a liquid food product. The damper comprises an inner tube, and a flange. The flange is connected to a top portion of the inner tube, such that an upper component, such as a valve, is connectable to the flange to be in fluid communication with the interior of the inner tube via a central passage of the flange. An upper portion of the interior of the inner tube and the central passage of the flange define a damping volume that during operation of the fluid damper is configured to act as a pressure absorbing gaseous pocket. The central passage comprises a lower end facing the inner tube and an upper end arranged to face the upper component. The upper end has a diameter smaller than a diameter of the lower end. A transition portion of the central passage extending from a lower end portion, associated with the lower end, towards the upper end has a continuously decreasing diameter.

As used herein, "pressure pulsations" refers to fluctuations or variations in the pressure level within the fluid line that transports the liquid product. These pulsations are essentially rapid changes in pressure above and below the system's average or nominal pressure. They can be caused by various factors, including the operation of pumps (such as a homogenizer), valves opening and closing, changes in flow velocity, or any other disruptions in the fluid flow.

Mitigating pressure pulsations offers significant benefits, including reducing vibration and noise, enhancing system efficiency, and preventing equipment damage. Specifically, minimizing pulsations helps prevent system components from vibrating, which can cause noise and lead to component fatigue failure. It also stabilizes pressure fluctuations, thus improving fluid transport efficiency, reducing energy consumption, and enhancing pump performance. Furthermore, it alleviates the stress on the system, minimizing wear and tear on seals and gaskets, and preventing structural damage to pipes and vessels.

As user herein, "central passage" refers to a passage of the flange extending through the flange. More specifically, the central passage extends between an upper end and a lower end thereof. As a result, the central passage may establish a fluid communication between an upper portion and a lower portion of the flange. The upper end can be positioned below the lower end in terms of vertical alignment, meaning the spatial orientation of the flange (and damper) is not constrained to the naming convention.

As user herein, "upper end" (of the central passage) refers to the upper opening or mouth of the central passage, whereas "lower end" refers to the lower opening or mouth of the central passage.

The fluid damper is advantageous in that the central passage of the flange comprises the transition portion which has a continuously decreasing diameter. In this way, the flange may be made more compact (reduced height) while not compromising the cleanability of the flange. In other words, the entire interior of the central passage may be located closer to the top portion of the inner tube. As a result, the complete fluid damper including the flange may be more easily heated and hence sterilized. At the same time, the efficiency of the damper in terms of damping pressure pulsations may not be affected in a negative way.

In practice, the inner tube may be provided with a jacket, i.e. a casing or covering that surrounds the inner tube, creating a space between the jacket and the inner tube itself. This jacket and the space may be designed to allow a liquid or fluid to flow through it, allowing the jacket to be used for heating the inner tube and the flange during cleaning and sterilization.

In some embodiments, the lower end portion may have an extension along a central axis of the fluid damper that is at most 10%, such at most 7%, of a length of the central passage.

In some embodiments, an initial diameter of the transition portion, at the lower end portion, may substantially match a diameter of the upper portion of the interior of the inner tube.

In some embodiments, the transition portion may extend along a portion of a length of the central passage.

In some embodiments, a ratio between the length of the central passage and a length extension of the transition portion along a central axis of the fluid damper may be in a range of 1 to 4, such as 1,5 to 3.

In some embodiments, the central passage may comprise the transition portion and an upper end portion that follows the transition portion, the upper end portion having a constant diameter.

In some embodiments, the transition portion may adjoin the upper end portion with a rounded curvature.

In some embodiments, the transition portion may adjoin the upper end portion with a radius in the range of 2 mm to 10 mm, such as 3 mm to 5 mm.

In some embodiments, the flange may be arranged to be welded to the upper component via a welding collar protruding from an upper surface of the flange and circumscribing the upper end of the central passage.

In some embodiments, the transition portion may extend along at most 70%, such as at most 50%, of a length of the central passage.

In some embodiments, the transition portion may be defined by a wall section, and wherein an angle of the wall section relative to a plane transverse to a central axis of the fluid damper may be in the range of 5° to 25°, such as 10° to 20°.

In some embodiments, the lower end portion may comprise a groove arrangement for reception of a gasket.

In some embodiments, the initial diameter may be in the range of 50 mm to 100 mm, such as 60 mm to 90 mm, and/or a ratio between the initial diameter and the diameter of the upper end may be in the range of 1,5 to 5, such as 2 to 4.

In some embodiments, a ratio between the initial diameter and a length of the central passage may be in the range of 1,5 to 5, such as 2 to 4.

In some embodiments, a cross-section of the flange as seen in a plane extending in parallel and coinciding with a central axis of the fluid damper, in a consecutive order, may comprise: An outer portion comprising: an outer lateral surface, a first radially extending downwardly facing surface, and a first laterally extending surface extending below a radially extending downwardly facing base surface. The base surface. A central passage portion comprising: a second laterally extending surface extending above the base surface, a second radially extending downwardly facing surface, a third laterally extending surface extending below the second radially extending downwardly facing surface, an upwardly slanting downwardly facing surface defining the transition portion, an upwardly curving surface, and a fourth laterally extending surface extending to the upper end.

Still other objectives, embodiments, and aspects, as well as additional features and advantages will appear from the following detailed description as well as from the accompanying schematic drawings.

### Drawings

Embodiments of the invention will now be described, by way of example, with reference to the accompanying schematic drawings, in which
Fig. 1 schematically illustrates a cross-sectional view of a fluid damper and an upper component in the form of a valve connected to the fluid damper via a flange thereof,
Fig. 2 is a schematic perspective view of the flange of the fluid damper in Fig. 1,
Fig. 3 is a schematic top view of the flange of the fluid damper in Fig. 1, and
Fig. 4 is a schematic cross-sectional view of the flange of the fluid damper in Fig. 1.

### Description

Embodiments will now be described more fully hereinafter with reference to the accompanying drawings, in which some, but not all, embodiments are shown. Indeed, the subject of the present disclosure may be embodied in many different forms and should not be construed as limited to the embodiments set forth herein; rather, these embodiments are provided so that this disclosure may satisfy applicable legal requirements.

Where possible, any of the advantages, features, functions, devices, and/or operational aspects of any of the embodiments described and/or contemplated herein may be included in any of the other embodiments described and/or contemplated herein, and/or vice versa. In addition, where possible, any terms expressed in the singular form herein are meant to also include the plural form and/or vice versa, unless explicitly stated otherwise. Accordingly, the terms "a" and/or "an" shall mean "at least one" or "one or more", even though the phrase "one or more" or "at least one" is also used herein. The terms "multiple", "plural" and "plurality" are intended to imply provision of two or more elements. The term "and/or" includes any and all combinations of one or more of the associated listed elements. Although the terms first, second, etc. may be used herein to describe various elements, these elements should not be limited by these terms. These terms are only used to distinguish one element from another. For example, a first element could be termed a second element, and, similarly, a second element could be termed a first element, without departing the scope of the present disclosure.

Well-known functions or constructions may not be described in detail for brevity and/or clarity. Unless otherwise defined, all terms (including technical and scientific terms) used herein have the same meaning as commonly understood by one of ordinary skill in the art to which this disclosure belongs.

Like reference signs refer to like elements throughout.

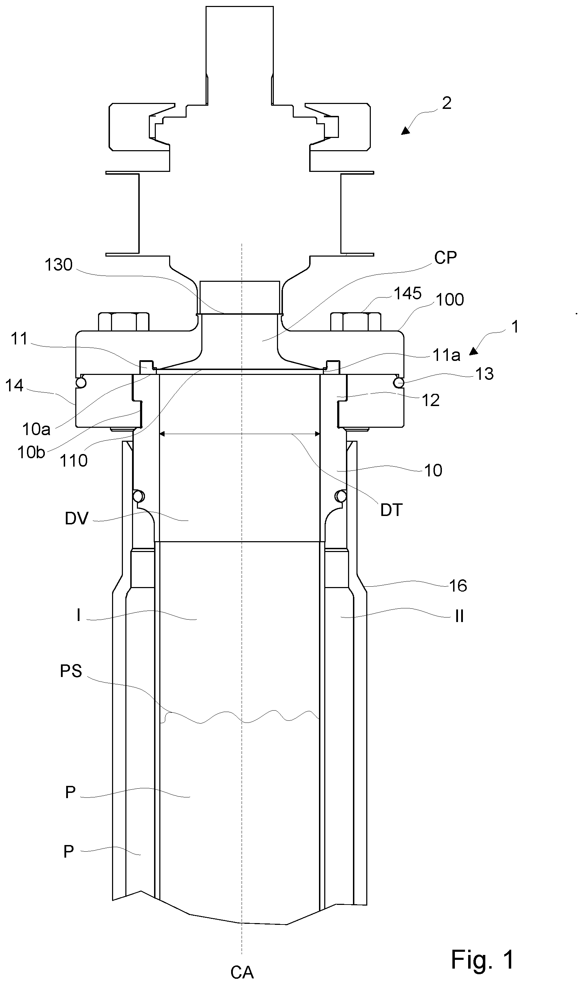

Fig. 1 schematically illustrates a top portion or top region of a fluid damper 1 and an upper component 2 in the form of a valve 2 connected to the fluid damper 1 by way of example. The fluid damper 1, or damper 1, is designed for, and hence suitable for, reducing pressure pulsations in a fluid line filled with a liquid food product P. To this end, the fluid damper 1 and the upper component 2 may form part of a damper arrangement. Such damper 1 may, as is known in the art, be connected to a fluid line of, for instance, a homogenizer. In practice, one damper 1 may suffice to suppress pressure fluctuations in the fluid line. However, it may be beneficial to use two or more dampers 1, for instance, one upstream of the homogenizer and one downstream of the homogenizer. The design of such dampers and damper arrangements are known in the art and will not be described in further detail herein.

The fluid damper 1 has an inner tube 10. The inner tube 10, may as illustrated in Fig. 1 have the form of a vertically arranged pipe, sometimes referred to as an upright tube. A lower end (not shown) of the inner tube 10 may typically be fluidly connected to the fluid line in which pressure pulsations are to be reduced. The fluid line may be a conventional pipe arranged to feed a liquid product P to an inlet of a homogenizer, and to receive the liquid product P via an outlet of the homogenizer. As is known in the art, it is common that pressure fluctuations are created in such fluid line. The fluid damper 1 reduces such pressure fluctuations. The liquid product P may be a liquid food product, such as milk, cream, juice, plant based products, or any other food product for which homogenization is used in the production process.

During operation of the fluid damper 1, the liquid product P is allowed to enter into the inner tube 10 from a bottom thereof. As a result, a damping volume DV is defined within the damper 1. The damping volume DV is, as is known in the art, configured to act as a pressure absorbing gaseous pocket during operation of the damper 1. As schematically illustrated in Fig. 1, the damping volume DV is formed within the damper 1 above a liquid surface PS of the liquid food product P.

In order to heat and sterilize the interior of the damper 1, the inner tube 10 is surrounded by a jacket 16. The jacket 16 is, as illustrated in Fig. 1, a casing or covering that surrounds the inner tube 10, creating a space II between the jacket 16 and the inner tube 10 itself. The jacket 16 and the space II are designed to allow a liquid, such as the liquid food product P, to flow through it, allowing the jacket 16 to be used for heating the inner tube 10. Hence, during sterilization of the interior of the damper 1, a heated liquid is fed through the space II between the jacket 16 and the inner tube 10 to heat the interior of the damper 1 to a temperature sufficient to sterilize the interior of the damper 1 including the damping volume DV.

A flange 100 is connected to a top portion 12 of the of the inner tube 10. The damping volume DV extends into the flange 100 all the way up to the upper component 2. Thus, the upper component 2 is connected to the flange 110 such that the upper component is in fluid communication with the interior I of the inner tube 10 via a central passage CP of the flange 100. Conventionally, such central passage CP extends in a non-tapering fashion upwards from the top portion 12 of the inner tube 10 a distance corresponding to about two thirds of a diameter of the inner tube 10 before tapering towards the upper component 2. As a result, a significant portion of the damping volume DV is defined by the flange 100. As a result, the upper component 2 is located at significant distance from the upper end 12 of the inner tube 10.

The present applicant has identified a potential problem with the above-described design of damper 1, in the form of reaching a sufficient temperature within an upper portion of the damping volume DV being defined by the central passage CP of the flange 100 to efficiently sterilize said upper portion of the damping volume DV, i.e. within the flange 100. As a result, sterilization of the upper portion of the damping volume DV being defined by the central passage CP may not only become time consuming but also unsecure. More specifically, the present applicant has identified that it is troublesome to reach a temperature of above 125 degrees Celsius at an upper portion of the damping volume DV during sterilization of the damper 1 when the damper is heated by feeding a heated liquid through the space II between the jacket 16 and the inner tube 10.

After significant experimentation, the applicant has found a simple yet effective solution to these problems. The solution involves, as illustrated in Figs. 1-4, providing a flange 100 of a different design. More specifically, the solution involves providing a flange 100 having a central passage CP including a transition portion 120 which extends from a lower end portion 112, associated with a lower end 110 of the central passage CP towards an upper end 130 of the central passage CP which has a continuously decreasing diameter. As a result, a smaller portion of the damping volume DV may be defined by the flange 100, meaning that the interior of damper 1 may more easily be heated by feeding a heated liquid through the space II between the jacket 16 and the inner tube 10. In other words, the entire flange 100 may be located closer to the top portion 12 of the inner tube 10 and closer to the space II between the jacket 16 and the inner tube 10.

In the following, the damper 1 and its flange 100 will be described in greater detail while referring to Figs. 1-4. As have been described above, the damper 1 comprises the inner tube 10 and the flange 100. As illustrated in Fig. 1, the flange 100 is connected to the top portion 12 of the inner tube 10. Further, the upper component 2 (the valve 2) is connected to the flange 100. More specifically, the upper component 2 is connected to the flange 100 such that the upper component 2 is in fluid communication with the interior I of the inner tube 10 via the central passage CP of the flange 100.

The depicted flange 100 of Figs. 1-4 may be integrally formed of stainless steel of grade SAE 316L commonly referred to as 316 stainless steel. Alternatively, the flange 100 may be formed of stainless steel of grade SAE 304 commonly referred to as 304 stainless steel. It is however conceivable to form the flange 100 of other materials, such as aluminum, brass or metal alloys. Further, the flange 100 may be formed of more than one part, where such parts jointly form the flange 100. The upper component 2 may be welded to the flange 100.

Further, as briefly explained above, the upper portion of the interior I of the inner tube 10 and the central passage CP of the flange 100 define the damping volume DV. Further, as best illustrated in Fig. 1, the central passage CP of the flange 100 comprises a lower end 110 facing the inner tube 10 and an upper end 130 facing the upper component 2. In other words, the central passage CP comprises a lower opening or mouth facing the inner tube 10 and an upper opening or mouth facing the upper component 2.

Further, as best illustrated in Fig, 4, the upper end 130 of the central passage CP has a diameter DU which is smaller than a diameter DL of the lower end 110 of the central passage CP. In other words, the lower opening or mouth is larger than the upper opening or mouth. Moreover, a transition portion 120 of the central passage CP extending from a lower end portion 112, associated with the lower end 110, towards the upper end 130 has a continuously decreasing diameter. As a result, the diameter of the central passage CP starts to decrease in proximity of the lower end 110 of the central passage CP. In this way, a length L of the central passage CP may be significantly reduced as compared to state of the art flanges. As a further result, the interior of the damper 1 and hence the damping volume DV may be more efficiently heated by feeding a heated liquid through the space II between the jacket 16 and the inner tube 10. This means in turn that the damper 1 may be sterilized more quickly and more securely. Moreover, the damper 1 may be sterilized more quickly and more efficiently while not compromising the efficiency of the damper in terms of damping pressure pulsations. Furthermore, the cleanability of the damper 1 may not be negatively affected by the above design of the flange 100. In practice, a cleaning liquid may, during e.g. a CIP process, efficiently reach any point of the interior of the damper 1 including the flange 100.

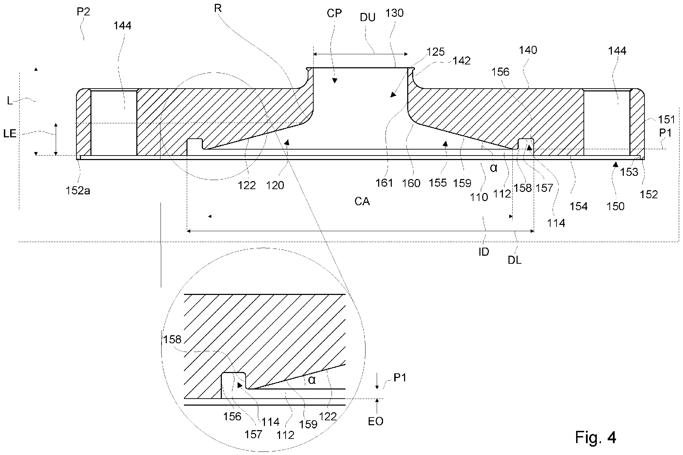

As best illustrated in Fig. 4, the transition portion 120 may be defined by a wall section 122. The wall section 122 may consequently circumscribe the central passage CP and at least partially define the same. Thus, the wall section 122 may generally speaking be a conical surface at least partially defining the central passage CP. Further, as best illustrated in Fig. 4, the wall section 122 may be angled relative to the central axis CA of the fluid damper 1. More specifically, an angle α of the wall section 122 relative to a plane P1 transverse to a central axis CA of the fluid damper 1 may be in the range of 5° to 25°. In this regard, it is currently believed than when the angle α of the wall section 122 relative to the plane P1 is in the range of 5° to 25°, an adequate balance between the length L of the central passage CP, the diameter DU of the upper end 130 and the diameter DL of the lower end 110 may be achieved. Further, it is currently believed than when the angle α of the wall section 122 relative to the plane P1 transverse to a central axis CA of the fluid damper 1 is in the range of 10° to 20°, an enhanced balance between the length L of the central passage CP, the diameter DU of the upper end 130 and the diameter DL of the lower end 110 may be achieved.

In order to efficiently reduce the length L of the central passage CP and hence the actual height of the flange 100, it is currently believed that when the lower end portion 112 has an extension EO (enlarged view of Fig. 4) along a central axis CA of the damper 1 that is at most 10% of the length L of the central passage CP an adequate balance between the ability to heat the interior of the damper 1 (including the flange 100) to sterilize it and the cleanability of the damper 1 may be achieved. In other words, it currently believed that the extension EO of the lower end portion 112 should only make up a fraction or small part of the length L of the central passage CP. Such a design means in practice that the transition portion 120 of the central passage CP may start relatively speaking close to the lower end 110 of the central passage CP. As a result, the central passage CP may start to taper relatively speaking close to the lower end 110 of the central passage CP and then continue to taper continuously along the transition portion 120 towards the upper end 130.

It is currently believed that when the lower end portion 112 has an extension EO along the central axis CA of the damper 1 that is at most 7% of the length L of the central passage CP an enhanced balance between the ability to heat the interior of the damper 1 to sterilize it and the cleanability of the damper 1 may be achieved.

As best illustrated in Fig, 4, the lower end portion 112 may comprise a groove arrangement 114. The groove arrangement 114 may as illustrated comprise a groove overlapping a peripheral region of the lower end 110 of the central passage CP. The groove arrangement may, as depicted in Fig. 1, be arranged for reception of a gasket 11.

As best illustrated in Figs. 1 and 4, an initial diameter ID (Fig. 4) of the transition portion 120 may substantially match a diameter DT (Fig. 1) of the upper portion of the interior I of the inner tube 10. That is, the transition portion 120 may at the lower end portion 112 substantially match the diameter DT of the upper portion of the interior I of the inner tube 10. As a result, a smoot transition between the inner tube 10 and the flange 100 may be realized when the gasket 11 is received in the groove arrangement 114. As illustrated in Fig. 1, radially facing inner surface 11a of the gasket 11 may define an opening in the gasket 11 that has a diameter substantially matching the initial diameter ID of the transition portion 120 and substantially matching the diameter DT of the upper portion of the interior I of the inner tube 10.

In practice, when designing the damper 1 the inner tube 10 may have an inner diameter in the range of 50 mm to 100 mm, such as 60 mm to 90 mm. In other words, the diameter DT of the upper portion of the interior I of the inner tube 10 may be in the range of 50 mm to 100 mm, such as 60 mm to 90 mm. Given this, the initial diameter ID of the transition portion 120 may be in the range of 50 mm to 100 mm, such as 60 mm to 90 mm. In this way the transition portion 120 may at the lower end portion 112 substantially match the diameter DT of the upper portion of the interior I of the inner tube 10. It is however conceivable that the initial diameter ID of the transition portion 120 may be in the range of 50 mm to 100 mm, such as 60 mm to 90 mm while not matching the diameter DT of the upper portion of the interior I of the inner tube 10.

Further, a ratio between the initial diameter ID and the diameter DU of the upper end 130 may be in the range of 1,5 to 5. In this way, the geometry and properties of the flange and hence the central passage CP may be tailored to e.g. suit different upper components 2. Thus, the flange 100 may be adapted to suit various upper components 2 including but not limited to valves, flow meters, pressure meters, tubes, conduits, filters, sensors, tanks or reservoirs. To this end, the initial diameter ID and the diameter DU of the upper end 130 may be in the range of 2 to 4.

It is currently believed that when a ratio between the initial diameter ID and the length L of the central passage CP is in the range of 1,5 to 5 an adequate balance between the ability of the flange 100 to transfer heat and the mechanical strength of the flange 100 may be achieved. Further, it is currently believed that when the ratio between the initial diameter ID and the length L of the central passage CP is in the range of 2 to 4 an enhanced balance between the ability of the flange 100 to transfer heat and the mechanical strength of the flange 100 may be achieved.

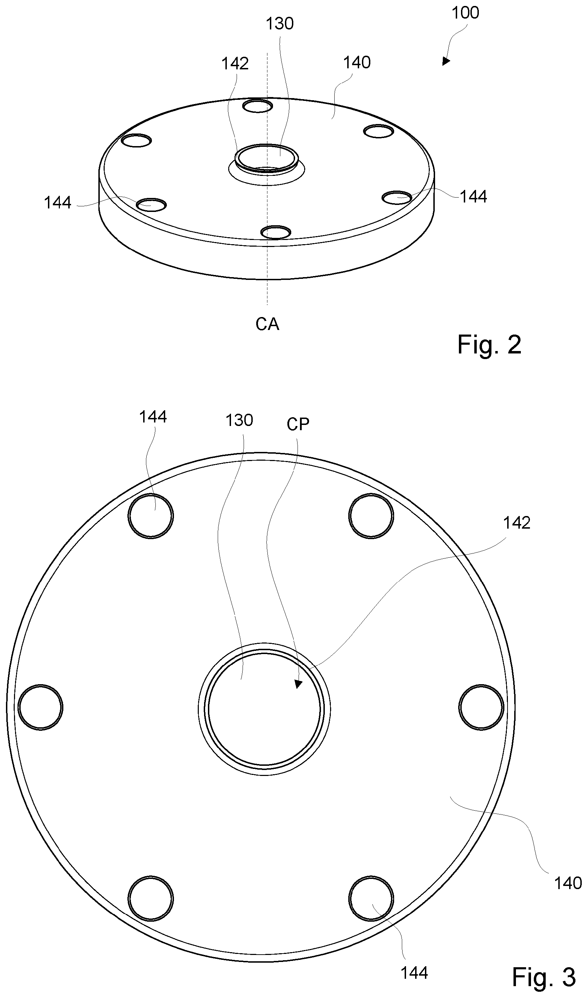

The gasket 11 may as illustrated in Fig. 1 be sandwiched between the flange 100 and a top surface 10a of the inner tube 10. In this way, a fluid tight connection may be established between the inner tube 10 and the flange 100. Further, as illustrated in Fig. 1, the flange 100 may be fixed in relation to the inner tube 10 via flange fixing ring 14 engaging a groove 10b at an outer surface of the inner tube 10. The flange fixing ring 14 may be a so-called split ring, such that halves thereof may be inserted into the groove 10b form opposite sides of inner tube 10 as is known in the art. Further, the flange 100 may be provided with a set of fixing holes 144 (Figs. 2-4) configured to receive a respective bolt 145 (Fig. 1) for fixing the flange 100 in relation to the flange fixing ring 14 and hence the inner tube 10. The flange fixing ring 14 may to this end comprise a set of threaded holes matching the fixing holes 144 of the flange 100.

Further, as best illustrated in Fig. 4, the transition portion 120 may extend along a portion of the length L of the central passage CP. As have been explained above, a minor portion of the length L of the central passage CP may be occupied by the lower end portion 112 including the groove arrangement 114. Further, as illustrated in Fig. 4, the central passage CP may additionally comprise the an upper end portion 125 that follows the transition portion 120. The upper end portion 125 may as illustrated in Fig. 4 have a constant diameter. An advantage associated with this design resides in that the central passage CP may be surrounded by material of a relatively speaking large thickness. As a result the flange 100 may more easily transfer heat so as to heat the interior, i.e. the damping volume DV, of the damper 1. Further, the flange 100 may at the same time become sturdier and more pressure resistant.

It is currently believed that when a ratio between the length L of the central passage CP and a length extension LE of the transition portion 120 along the central axis CA of the damper 1 is in a range of 1 to 4 an adequate balance between the ability of the flange 100 to transfer heat and the mechanical strength of the flange 100 may be achieved. Further, it is currently believed that when a ratio between the length L of the central passage CP and the length extension LE of the transition portion 120 is in a range of 1,5 to 3 an enhanced balance between the ability of the flange 100 to transfer heat and the mechanical strength of the flange 100 may be achieved.

As used herein, the central axis CA may refer to the longitudinal axis of the central passage CP of the flange 100, which may be the same as the longitudinal axis of the inner tube 10.

As used herein, the length L of the central passage CP may be the axial length of the central passage CP measured along the central axis CA between: i) a lower axial reference plane at the lower end opening of the central passage CP, and ii) an upper axial reference plane at the upper end opening of the central passage CP.

For avoidance of doubt, L is an axial length and not a curved surface length.

The central passage CP may comprise the transition portion 120 in which the diameter decreases toward the upper end.

The length extension LE of the transition portion may be the axial length measured along the central axis CA between: i) a first axial reference plane at which the diameter of the central passage begins to depart from the diameter of the lower end portion 112, and ii) a second axial reference plane at which the diameter of the central passage reaches the diameter of the upper end portion 125, or, where no constant-diameter upper end portion is present, the diameter at the upper end opening of the central passage CP.

Accordingly, LE may be the axial extent over which the diameter reduction of the transition portion takes place.

A continuously decreasing diameter may refer to that, when moving along the central axis CA from the lower end portion toward the upper end, the local diameter of the central passage CP decreases monotonically, meaning without any local increase in diameter, over the axial extent of the transition portion. Manufacturing tolerances do not change the intended meaning of this definition.

As used herein, a relationship between two dimensions may be expressed by stating that one dimension is a percentage of the other dimension. In such a case, the expression "X is A% to B% of Y" means that X is from A/100 times Y to B/100 times Y.

In relation to the transition portion 120, the length extension LE of the transition portion 120 along the central axis CA may be expressed as a percentage of the length L of the central passage CP. For example, the length extension LE may be 25% to 100% of the length L of the central passage CP, preferably about 33% to about 67% of the length L.

As used herein, the initial diameter ID may refer to the diameter of the central passage CP in the lower end portion 112. As used herein, the diameter DU of the upper end 130 may refer to the diameter of the central passage CP at, or adjacent to, the upper end 130, for example at an upper end portion following the transition portion, where present. Where a diameter is referenced, it may be determined in a cross-sectional plane perpendicular to the central axis CA at the relevant axial position.

In relation to the initial diameter ID and the diameter DU of the upper end 130, the diameter DU may be expressed as a percentage of the initial diameter ID. For example, the diameter DU may be 20% to about 66.7% of the initial diameter ID, preferably about 25% to about 50% of the initial diameter ID.

In relation to the initial diameter ID and the length L of the central passage CP, the length L may be expressed as a percentage of the initial diameter ID. For example, the length L may be 20% to about 66.7% of the initial diameter ID, preferably about 25% to about 50% of the initial diameter ID.

Based on the experimental results and other experience, it is currently believed that an adequate balance between the ability of the flange 100 to transfer heat and the mechanical strength of the flange 100 may be achieved when the transition portion 120 extends along at most 70% of the length L of the central passage CP. It is however currently believed that an enhanced balance between the ability of the flange 100 to transfer heat and the mechanical strength of the flange 100 may be achieved when the transition portion 120 extends along at most 50% of the length L of the central passage CP.

Further, as best illustrated in Fig. 4, the transition portion 120 may adjoin the upper end portion 125 with a rounded curvature. In this way, a smoot transition may be achieved between the transition portion 120 and the upper end portion 125. As a result, the cleanability of the flange 100 and hence the damper 1 may be facilitated. At the same time the risk of the flange 100 cracking or breaking may be reduced.

It is currently believed that when the transition portion 120 adjoins the upper end portion 125 with a radius R in the range of 2 mm to 10 mm an adequate balance between the cleanability of the flange 100 and a reduced risk of the flange 100 cracking or breaking may be achieved. Further, it is currently believed that when the transition portion 120 adjoins the upper end portion 125 with a radius R in the range of 3 mm to 5 mm an enhanced balance between the cleanability of the flange 100 and a reduced risk of the flange 100 cracking or breaking may be achieved.

Furter, the flange 100 may be arranged to be welded to the upper component 2. In this regard, Fig. 1 schematically illustrates how the flange 100 is welded to the upper component 2, i.e. the valve 2 of Fig. 1. In order to be able to weld the flange 100 to the upper component 2, the flange may, as best illustrated in Figs. 2 and 3, be provided with a welding collar 142. Such welding collar 142 may as illustrated protrude from an upper surface 140 of the flange 100. The welding collar 142 may circumscribe the upper end 130 of the central passage CP, i.e. as best illustrated in Fig. 2. By the welding collar 142 protruding beyond the upper surface 140, welding of the flange 100 to the upper component 2 via the welding collar 142 may be facilitated. In this regard an interface between the welding flange 142 and the upper component 2 may be easily accessible during welding.

As have been explained above, Fig. 4 illustrates the flange 100 of Fig. 1 in a cross-sectional view. More specifically, Fig. 4 illustrates a cross-section CS of the flange 100 as seen in a plane P2 extending in parallel and coinciding with the central axis CA of the fluid damper 1. When following the cross-section CS from a lower outermost position (lower outer edge) inwards (towards the central axis CA) via the central passage CP to the upper end 130 of the central passage CP, the cross-section comprises an outer portion 150 followed by a radially extending downwardly facing base surface 154, which in turn is followed by a central passage portion 155 that defines the central passage CP.

As illustrated in Fig. 4, the outer portion 150 of the cross-section CS is defined by an outer lateral surface 151 followed by a first radially extending downwardly facing surface 152, which in turn is followed by a first laterally extending surface 153 extending below the base surface 154. The outer lateral surface 151, the first radially extending downwardly facing surface 152 and the first laterally extending surface 153 jointly form an annular protrusion 152a at a lower outer edge of the flange 100. The annular protrusion 152a may, as illustrated in Fig. 1, contact an O-ring 13 arranged between the annular protrusion 152a of the flange 100 and the flange fixing ring 14.

As illustrated in Fig. 4, the central passage portion 155 that defines the central passage CP starts after the radially extending downwardly facing base surface 154 as seen towards the central axis CA of the damper 1. The central passage portion 155 of the cross-section CS is defined by a second laterally extending surface 156 extending above the base surface 154 followed by a second radially extending downwardly facing surface 157, which in turn is followed by a third laterally extending surface 158 extending below the second radially extending downwardly facing surface 157, which in turn is followed by an upwardly slanting downwardly facing surface 159 defining the transition portion 120, which in turn is followed by an upwardly curving surface 160, which in turn is followed by a fourth laterally extending surface 161 extending to the upper end 130 of the central passage CP.

Thus, the upwardly slanting downwardly facing surface 159 defining the transition portion 120 may correspond to the above-described wall section 122. Similarly, the upwardly curving surface 160 may define the radius R where the transition portion 120 adjoins the upper end portion 125.

The present disclosure is not limited to fluid dampers. Rather, the flange of the damper may be used where any type of component is to be connected to tube-like component.

From the description above follows that, although various embodiments of the invention have been described and shown, the invention is not restricted thereto, but may also be embodied in other ways within the scope of the subject-matter defined in the following claims.

## Claims

1. Fluid damper (1) for reducing pressure pulsations in a fluid line filled with a liquid food product (P), the damper (1) comprising:
an inner tube (10), and
a flange (100),
wherein the flange (100) is connected to a top portion (12) of the inner tube (10), such that an upper component (2), such as a valve, is connectable to the flange (100) to be in fluid communication with the interior (I) of the inner tube (10) via a central passage (CP) of the flange (100),
wherein an upper portion of the interior (I) of the inner tube (10) and the central passage (CP) of the flange (100) define a damping volume (DV) that during operation of the fluid damper (1) is configured to act as a pressure absorbing gaseous pocket,
wherein the central passage (CP) comprises a lower end (110) facing the inner tube (10) and an upper end (130) arranged to face the upper component (2), the upper end (130) having a diameter (DU) smaller than a diameter (DL) of the lower end (110),
wherein a transition portion (120) of the central passage (CP) extending from a lower end portion (112), associated with the lower end (110), towards the upper end (130) has a continuously decreasing diameter.

2. The fluid damper (1) according to claim 1, wherein the lower end portion (112) has an extension (EO) along a central axis (CA) of the fluid damper (1) that is at most 10%, such at most 7%, of a length (L) of the central passage (CP).

3. The fluid damper (1) according to claim 1 or 2, wherein an initial diameter (ID) of the transition portion (120), at the lower end portion (112), substantially matches a diameter (DT) of the upper portion of the interior (I) of the inner tube (10).

4. The fluid damper (1) according to any one of the preceding claims, wherein the transition portion (120) extends along a portion of a length (L) of the central passage (CP).

5. The fluid damper (1) according to claim 4, wherein a length extension (LE) of the transition portion (120) along a central axis (CA) of the fluid damper (1) is 25% to 100% of the length (L) of the central passage (CP), preferably about 33% to about 67% of L.

6. The fluid damper (1) according to any one of the preceding claims, wherein the central passage (CP) comprises the transition portion (120) and an upper end portion (125) that follows the transition portion (120), the upper end portion (125) having a constant diameter.

7. The fluid damper (1) according to claim 6, wherein the transition portion (120) adjoins the upper end portion (125) with a rounded curvature.

8. The fluid damper (1) according to claim 6 or 7, wherein the transition portion (120) adjoins the upper end portion (125) with a radius (R) in the range of 2 mm to 10 mm, such as 3 mm to 5 mm.

9. The fluid damper (1) according to any one of the preceding claims, wherein the flange (100) is arranged to be welded to the upper component (2) via a welding collar (142) protruding from an upper surface (140) of the flange (100) and circumscribing the upper end (130) of the central passage (CP).

10. The fluid damper (1) according to any one of the preceding claims, wherein the transition portion (120) extends along at most 70%, such as at most 50%, of a length (L) of the central passage (CP).

11. The fluid damper (1) according to any one of the preceding claims, wherein the transition portion (120) is defined by a wall section (122), and wherein an angle (α) of the wall section (122) relative to a plane (P1) transverse to a central axis (CA) of the fluid damper (1) is in the range of 5° to 25°, such as 10° to 20°.

12. The fluid damper (1) according to any one of the preceding claims, wherein the lower end portion (112) comprises a groove arrangement (114) for reception of a gasket (11).

13. The fluid damper (1) according to claim 3, wherein the initial diameter (ID) is in the range of 50 mm to 100 mm, such as 60 mm to 90 mm, and/or wherein the diameter (DU) of the upper end (130) is 20% to about 66.7% of the initial diameter (ID), preferably about 25% to about 50% of the initial diameter (ID).

14. The fluid damper (1) according to claim 3, wherein the length (L) of the central passage (CP) is 20% to about 66.7% of the initial diameter (ID), preferably about 25% to about 50% of the initial diameter (ID).

15. The fluid damper (1) according to claim 1, wherein a cross-section (CS) of the flange (100) as seen in a plane (P2) extending in parallel and coinciding with a central axis (CA) of the fluid damper (1), in a consecutive order, comprises:
an outer portion (150) comprising:
an outer lateral surface (151),
a first radially extending downwardly facing surface (152), and
a first laterally extending surface (153) extending below a radially extending downwardly facing base surface (154),
the base surface (154), and
a central passage portion (155) comprising:
a second laterally extending surface (156) extending above the base surface (154),
a second radially extending downwardly facing surface (157),
a third laterally extending surface (158) extending below the second radially extending downwardly facing surface (157),
an upwardly slanting downwardly facing surface (159) defining the transition portion (120),
an upwardly curving surface (160), and
a fourth laterally extending surface (161) extending to the upper end (130).
